# EUROPEAN PATENT APPLICATION

(11) **EP 4 645 777 A1**
(43) Date of publication of application: **05.11.2025**
(21) Application number: 22969818.8
(22) Date of filing: 30.12.2022
(51) Int. Cl.: H04L 27/00

(54) **METHOD AND APPARATUS FOR TRANSMITTING OR RECEIVING INDICATION INFORMATION, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Gunzelmann, Rainer
(86) International application number: PCT/CN2022/144126
(87) International publication number: WO 2024/138676

(57) **Abstract**

Provided in the present disclosure are a method and apparatus for transmitting or receiving indication information, and a readable storage medium, which are applied to the technical field of wireless communications. The method for receiving indication information is executed by a user equipment (UE), and comprises: receiving first indication information, which is transmitted by a network device, wherein the first indication information is used for indicating discontinuous transmission and reception information of a carrier, and the discontinuous transmission and reception information comprises at least one of the following: discontinuous transmission (DTX) information and discontinuous reception (DRX) information. In the present disclosure, a network device transmits indication information, and the indication information is used to indicate DTX information and/or DRX information in a serving cell, such that a UE accurately learns of the state of the network device executing DTX and/or DRX, and correspondingly performs data transmission and reception according to said state, thereby ensuring normal transmission of data on a UE side when the network device executes DTX and/or DRX.

## Description

### TECHNICAL FIELD

The present disclosure relates to a field of wireless communication technologies, and particularly to a method and an apparatus for transmitting or receiving indication information, and a readable storage medium.

### BACKGROUND

A network device may perform discontinuous transmission, DTX, and/or discontinuous reception, DRX, to reduce power consumption.

However, in a case that the network device performs the DTX and/or DRX, it may affect the signal transmission and reception of user equipment, UE. Therefore, it is necessary to consider how to enable the UE to accurately know whether the network device is performing DTX and/or DRX within different time periods.

### SUMMARY

Provided in the embodiments of the present disclosure are a method and an apparatus for transmitting or receiving indication information, and a readable storage medium.

In a first aspect, provided in the embodiments of the present disclosure is a method for receiving indication information. The method is performed by a user equipment (UE), and includes:
receiving first indication information transmitted by a network device, in which the first indication information is configured to indicate discontinuous transmission and reception information of a carrier, in which the discontinuous transmission and reception information includes at least one of: discontinuous transmission (DTX) information, or discontinuous reception (DRX) information.

In some possible embodiments, the carrier is a primary carrier or a secondary carrier.

In some possible embodiments, receiving the first indication information transmitted by the network device includes:
receiving downlink control information (DCI) transmitted by the network device, in which the DCI includes the first indication information.

In some possible embodiments, cyclic redundancy check (CRC) of the DCI is scrambled by a set radio network temporary identity (RNTI), in which the set RNTI is configured to identify that the DCI carries the discontinuous transmission and reception information.

In some possible embodiments, the first indication information includes one or more first information blocks, in which each first information block indicates the discontinuous transmission and reception information of one carrier, and different first information blocks indicate the discontinuous transmission and reception information of different carriers.

In some possible embodiments, the first indication information includes a plurality of second information blocks, in which each second information block indicates the discontinuous transmission and reception information of a UE group, and different second information blocks indicate the discontinuous transmission and reception information of different UE groups, in which the UE group includes at least one UE, and the second information block includes one or more first information blocks.

In some possible embodiments, numbers of first information blocks included in different second information blocks are the same or different.

In some possible embodiments, the method further includes: receiving higher-layer signaling transmitted by the network device, in which the higher-layer signaling is configured to indicate a position of the discontinuous transmission and reception information corresponding to the UE in the first indication information.

In some possible embodiments, the DCI includes second indication information, in which the second indication information is configured to indicate whether the first indication information indicates the DTX information or the DRX information.

In some possible embodiments, the DCI includes third indication information, in which the third indication information is configured to indicate whether the first indication information indicates the DTX information or the DRX information of each carrier.

In some possible embodiments, the DCI includes fourth indication information, in which the fourth indication information is configured to indicate whether the first indication information indicates the DTX information or the DRX information of each carrier in each UE group.

In some possible embodiments, the first indication information included in the DCI takes effect at a set time-domain position.

In some possible embodiments, the DTX information includes a DTX effective duration, and the DRX information includes a DRX effective duration.

In a second aspect, provided is a method for transmitting indication information. The method is performed by a network device, and includes:
transmitting first indication information, in the first indication information is configured to indicate discontinuous transmission and reception information of a carrier, in which the discontinuous transmission and reception information includes at least one of: discontinuous transmission (DTX) information, or discontinuous reception (DRX) information.

In some possible embodiments, the carrier is a primary carrier or a secondary carrier.

In some possible embodiments, transmitting the first indication information includes:
transmitting downlink control information (DCI), in which the DCI includes the first indication information.

In some possible embodiments, cyclic redundancy check (CRC) of the DCI is scrambled by a set radio network temporary identity (RNTI), in which the set RNTI is configured to identify that the DCI carries the discontinuous transmission and reception information.

In some possible embodiments, in which the first indication information includes one or more first information blocks, in which each first information block indicates the discontinuous transmission and reception information of one carrier, and different first information blocks indicate the discontinuous transmission and reception information of different carriers.

In some possible embodiments, the first indication information includes a plurality of second information blocks, in which each second information block indicates the discontinuous transmission and reception information of a UE group, and different second information blocks indicate the discontinuous transmission and reception information of different UE groups, in which the UE group includes at least one UE, and the second information block includes a plurality of first information blocks.

In some possible embodiments, numbers of first information blocks included in different second information blocks are the same or different.

In some possible embodiments, the method further includes: receiving higher-layer signaling transmitted by the network device, in which the higher-layer signaling is configured to indicate a position of the discontinuous transmission and reception information corresponding to the UE in the first indication information.

In some possible embodiments, the DCI includes second indication information, in which the second indication information is configured to indicate whether the first indication information indicates the DTX information or the DRX information.

In some possible embodiments, the DCI includes third indication information, in which the third indication information is configured to indicate whether the first indication information indicates the DTX information or the DRX information of each carrier.

In some possible embodiments, the DCI includes fourth indication information, in which the fourth indication information is configured to indicate whether the first indication information indicates the DTX information or the DRX information of each carrier in each UE group.

In some possible embodiments, the first indication information included in the DCI takes effect at a set time-domain position.

In some possible embodiments, the DTX information includes a DTX effective duration, and the DRX information includes a DRX effective duration.

In a third aspect, provided is a user equipment (UE), including:
a transceiver module, configured to receive first indication information transmitted by a network device, in which the first indication information is configured to indicate discontinuous transmission and reception information of a carrier, in which the discontinuous transmission and reception information includes at least one of: discontinuous transmission (DTX) information, or discontinuous reception (DRX) information.

In a fourth aspect, provided is a network device, including:
a transceiver module, configured to transmit first indication information, in which the first indication information is configured to indicate discontinuous transmission and reception information of a carrier, in which the discontinuous transmission and reception information includes at least one of: discontinuous transmission (DTX) information, or discontinuous reception (DRX) information.

In a fifth aspect, provided is a communication apparatus, including a processor and a memory.

The memory is used to store a computer program.

The processor is used to execute the computer program to perform the first aspect or any possible design in the first aspect.

In a sixth aspect, provided is a communication apparatus, including a processor and a memory.

The memory is used to store a computer program.

The processor is used to execute the computer program to perform the second aspect or any possible design in the second aspect.

In a seventh aspect, provided is a computer-readable storage medium, in which an instruction is stored on the computer-readable storage medium, and when the instruction is executed on a computer, the computer is caused to perform the first aspect or any possible design in the first aspect.

In an eighth aspect, provided is a computer-readable storage medium, in which an instruction is stored on the computer-readable storage medium, and when the instruction is executed on a computer, the computer is caused to perform the second aspect or any possible design in the second aspect.

In an ninth aspect, provided is a communication system, including a user equipment (UE), configured to implement the first aspect or any possible design in the first aspect; and a network device, configured to implement the second aspect or any possible design in the second aspect.

In the present disclosure, a network device transmits indication information, in which the indication information is configured to indicate DTX information and/or DRX information in a serving cell, so that the UE may accurately know a state of the network device performing the DTX and/or DRX, and perform data transmission and reception based on the state correspondingly, thereby ensuring the normal data transmission on the UE in a case that the network device performs the DTX and/or DRX.

### BRIEF DESCRIPTION OF THE DRAWINGS

The attached drawings described herein are provided for further understanding of the embodiments of the present disclosure and form part of the present disclosure. The illustrative embodiments of the present disclosure and their descriptions are used to interpret the embodiments of the present disclosure and do not constitute an improper limitation of the embodiments of the present disclosure. In the attached drawings:

The attached drawings herein are incorporated into the specification and form part of the present specification, illustrate embodiments that conform to the embodiments of the present disclosure and are used together with the specification to explain the principles of the embodiments of the present disclosure.
FIG. 1 is a diagram illustrating an architecture of a wireless communication system provided in an embodiment of the present disclosure;
FIG. 2 is a diagram of an interaction process for transmitting indication information provided in an embodiment of the present disclosure;
FIG. 3 is a diagram of an interaction process for transmitting indication information provided in another embodiment of the present disclosure;
FIG. 4 is a diagram of an interaction process for transmitting indication information provided in an embodiment of the present disclosure;
FIG. 5 is a diagram of an interaction process for transmitting indication information provided in an embodiment of the present disclosure;
FIG. 6 is a diagram of an interaction process for transmitting indication information provided in an embodiment of the present disclosure;
FIG. 7 is a block diagram of an apparatus for receiving indication information provided in an embodiment of the present disclosure;
FIG. 8 is a block diagram of an apparatus for receiving indication information provided in an embodiment of the present disclosure;
FIG. 9 is a block diagram of an apparatus for transmitting indication information provided in an embodiment of the present disclosure;
FIG. 10 is a block diagram of an apparatus for transmitting indication information provided in another embodiment of the present disclosure;

### DETAILED DESCRIPTION

The following further explains the embodiments of the present disclosure in combination with the attached drawings and specific implementations.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiment of the present disclosure are merely for the purpose of describing a particular embodiment and are not intended to limit the embodiment of the present disclosure. The terms "a" and "the" in the singular form as used in the embodiment of the present disclosure and the accompanying claims are also intended to include the majority form, unless the context clearly indicates otherwise. It should also be understood that the term "and/or" as used herein refers to and encompasses any or all possible combinations of one or more associated listed items.

It is understood that although the terms first, second, third, etc. may be used to describe various information in the embodiments of the present disclosure, such information should not be limited to these terms. These terms are used only to distinguish the same type of information from one to another. For example, without leaving the scope of the present disclosure, the first information may also be referred to as the second information, and similarly, the second information may also be referred to as the first information. Depending on the context, the words "if" used here can be interpreted as "in... when" or "in response to determining".

The following describes the embodiments of the present disclosure in detail. Examples of the embodiments are shown in the attached drawings, in which the same or similar labels represent the same or similar elements from beginning to end. The embodiments described below with reference to the attached drawings are exemplary and intended to explain the present disclosure, and should not be construed as limitations of the present disclosure.

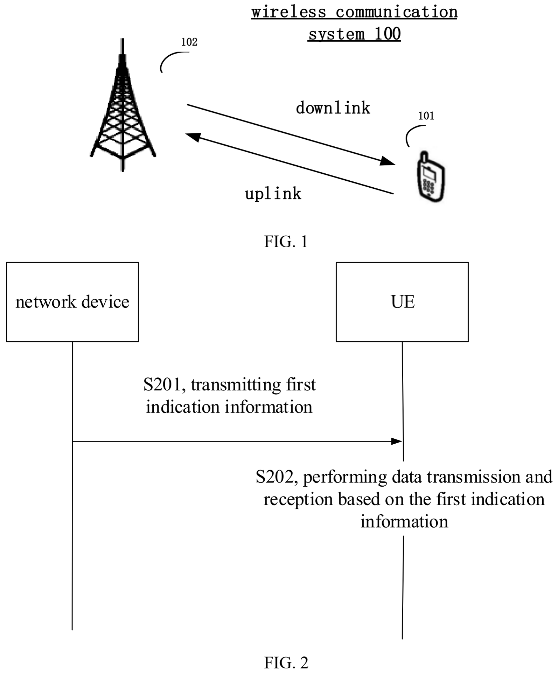

As shown in FIG. 1, the method provided by the embodiments of the present disclosure may be applied to a wireless communication system 100, in which the wireless communication system may include a user equipment (UE) 101 and a network device 102, with no limit on the number of included devices.

It should be understood that the above-mentioned wireless communication system 100 may be applied to both low-frequency scenarios and high-frequency scenarios. The application scenarios of the wireless communication system 100 include but are not limited to a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system or a future evolved public land mobile network (PLMN) system, etc.

The UE 101 shown above may be a terminal, an access UE, a UE unit, a UE station, a mobile station (MS), a remote station, a remote UE, a mobile terminal, a wireless communication device, and a UE agent, etc. The UE 101 may have wireless transceiver functions, may communicate (such as wireless communication) with one or more network devices of one or more communication systems and receive network service provided by the network device. Here, the network device includes but is not limited to the network device 102 shown in the figure.

The UE 101 may be a cellular phone, a cordless phone, a session initiation protocol (SIP) phone, a wireless local loop (WLL) station, a personal digital assistant (PDA) device, a handheld device with wireless communication functions, a computing device, other processing devices connected to wireless modems, an in-vehicle device, a wearable device, a UE in the future 5G network or a UE in the future evolved PLMN network, etc.

For example, the network device 102 may be an access network device (or access network site). The access network device refers to the device that provides network access functions, such as a radio access network (RAN) base station, etc. Specifically, the network device may include a base station (BS), or include a base station and a wireless resource management device configured to control base station, etc. Further, the network device may include a relay station (relay device), an access point, as well as a base station in the future 5G network, a base station or an NR base station in the future evolved PLMN network, etc. Further, the network device may be a wearable device or a vehicle-mounted device. The network device 102 may also be a communication chip with a communication module.

In a case that the network device performs the DTX and/or DRX, it may affect signal transmission and reception of the UE. For example, for the UE in a radio resource control (RRC) idle state or an RRC inactive state, during a period of the network device performing the DTX, the network device may no longer transmit some signals (such as paging information, or system information, etc.) transmitted periodically in a period during which the DTX is not performed; and during a period of the network device performing of the DRX, the network device may no longer receive some signals (such as a physical random access channel (PRACH), etc.) detected periodically in a period during which the DRX is not performed.

In order to ensure that the transmission and reception of the UE are not affected by the situation that the network device performs the DTX and/or DRX, it is necessary to know whether the network device is performing the DTX and/or DRX within different time periods. In a case that the network device uses different beams, it is also necessary to know whether the network device is performing the DTX and/or DRX on different carriers within different time periods.

An embodiment of the present disclosure provides a method for transmitting indication information. FIG. 2 is a flowchart showing a method for transmitting indication information according to an embodiment. As shown in FIG. 2, the method includes S201 to S202.

S201, a network device transmits first indication information.

The first indication information is configured to indicate discontinuous transmission and reception information of a carrier, in which the discontinuous transmission and reception information includes at least one of: discontinuous transmission (DTX) information, or discontinuous reception (DRX) information. Alternatively, it may be described as that the first indication information is configured to indicate at least one of the following information of a carrier: DTX information, or DRX information.

In some possible implementations, the DTX information includes a DTX effective duration, and the DRX information includes a DRX effective duration.

The UE in an RRC connected state receives the first indication information transmitted by the network device, to obtain the discontinuous transmission and reception information of one or more carriers of the network device.

In some possible implementations, the carrier is a primary carrier or a secondary carrier.

In some possible implementations, in a case that the indication information transmitted by the network device indicates the DTX information of the carrier, it means that the network device performs DTX on the carrier during the DTX effective period, that is, the network device is in a DTX state (which may be called a first state) on the carrier.

In a case that the indication information transmitted by the network device indicates the DRX information of the carrier, it means that the network device performs DRX on the carrier during the DRX effective period, that is, the network device is in a DRX state (which may be called a second state) on the carrier.

In a case that the indication information transmitted by the network device indicates the DTX information and the DRX information of the carrier, it means that the network device performs the DRX on the carrier during the DTX effective period, that is, the network device is in a DTX and DRX state (which may be called a third state) on the carrier during the DRX effective period.

In some possible implementations, the way of the network device transmitting indication information may include: transmitting downlink control information (DCI), in which the DCI includes the first indication information. After receiving the DCI, the UE may obtain the first indication information included in the DCI.

Optionally, cyclic redundancy check (CRC) of the DCI is scrambled by a set radio network temporary identity (RNTI), in which the set RNTI is configured to identify that the DCI carries the discontinuous transmission and reception information.

Optionally, the first indication information included in the DCI takes effect at a set time-domain position.

In an example, the set the time-domain position is in a next slot after a slot used for transmitting or receiving the DCI.

In some possible implementations, the first indication information includes one or more first information blocks, in which each first information block indicates the discontinuous transmission and reception information of one carrier, and different first information blocks indicate the discontinuous transmission and reception information of different carriers.

In an example, the first indication information includes 5 first information blocks, and each first information block corresponds to one carrier. Different first information blocks correspond to different carriers. Each information block occupies 4 bits. 4 bits of one information block may be configured to indicate 16 kinds of DTX durations, 16 kinds of DRX durations, or m kinds of DTX durations and n kinds of DRX durations on the corresponding carrier, where both m and n are positive integers, and the sum of m and n is 16.

In some possible implementations, the first indication information includes a plurality of second information blocks, in which each second information block indicates the discontinuous transmission and reception information of a user equipment (UE) group, and different second information blocks indicate the discontinuous transmission and reception information of different UE groups, in which the UE group includes at least one UE, and the second information block includes one or more first information blocks.

Numbers of first information blocks included in different second information blocks are the same or different. The number of the first information blocks included in the second information block represents the number of serving carriers of the UE or the number of activated serving carriers of the UE corresponding to the second information block.

In an example, the first indication information includes 4 second information blocks, and each second information block corresponds to one UE group. One of the second information blocks includes 5 first information blocks, and each first information block corresponds to one carrier. Different first information blocks correspond to different carriers. Each information block occupies 4 bits. 4 bits of one information block may be configured to indicate 16 kinds of DTX durations, 16 kinds of DRX durations, or m kinds of DTX durations and n kinds of DRX durations on the corresponding carrier, where both m and n are positive integers, and the sum of m and n is 16.

Each UE group includes at least one UE identifier. The UE group may represent one or more UE groups generated by an actual grouping operation of network devices or UEs. However, it is also possible that there is no need to perform the actual UE grouping operation by network devices or UEs, and the UE group is used to represent one or more UEs corresponding to the same second information block.

S202, the UE performs data transmission and reception based on the first indication information.

In some possible implementations, in a case that the UE determines that the network device performs DTX on a carrier based on the first indication information, the UE receives downlink data during a DTX-on period on the carrier and does not receive downlink data during a DTX-off period on the carrier.

In a case that the UE determines that the network device performs DRX based on the first indication information, the UE transmits uplink data during a DRX-on period on the carrier and does not transmit uplink data during a DRX-off period on the carrier.

In a case that the UE determines that the network device performs DTX and DRX based on the first indication information, the UE receives downlink data during the DTX-on period on the carrier, does not receive downlink data during the DTX-off period on the carrier, transmits uplink data during the DRX-on period on the carrier, and does not transmit uplink data during the DRX-off period on the carrier.

In the embodiments of the present disclosure, the network device transmits the first indication information, in which the first indication information is configured to indicate DTX information and/or DRX information on a carrier, so that the UE may accurately know a state of the network device performing the DTX and/or DRX on different carriers, and perform data transmission and reception on different carriers based on the state correspondingly, thereby ensuring the normal data transmission on the UE side in a case that the network device performs the DTX and/or DRX.

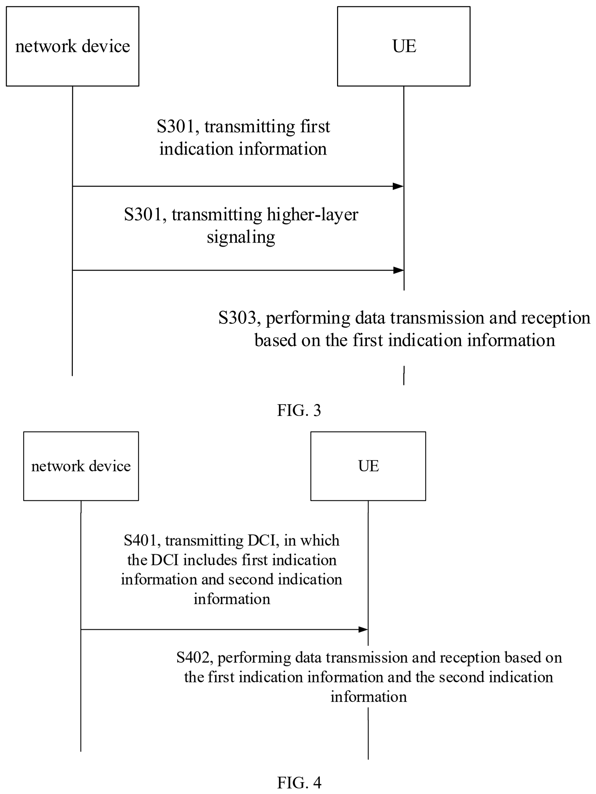

An embodiment of the present disclosure provides a method for transmitting indication information. FIG. 3 is a flowchart showing a method for transmitting indication information according to an embodiment. As shown in FIG. 3, the method includes S301 to S303.

S301, a network device transmits first indication information.

The content in S301 is the same as that in S201, reference may be made to S201, which will not be elaborated here.

S302, the network device transmits higher-layer signaling.

The higher-layer signaling is configured to indicate a position of discontinuous transmission and reception information corresponding to a UE in the first indication information, so that the UE may quickly determine the discontinuous transmission and reception information corresponding to the UE in the first indication information according to the higher-layer signaling.

In some possible implementations, S302 may be executed before S301.

S303, the UE performs data transmission and reception based on the first indication information.

The content in S303 is the same as that in S202, reference may be made to S202, which will not be elaborated here.

An embodiment of the present disclosure provides a method for transmitting indication information. FIG. 4 is a flowchart showing a method for transmitting indication information according to an embodiment. As shown in FIG. 4, the method includes S401 to S402.

S401, a network device transmits downlink control information (DCI), in which the DCI includes first indication information and second indication information.

The first indication information is configured to indicate discontinuous transmission and reception information of a carrier, in which the discontinuous transmission and reception information includes at least one of: discontinuous transmission (DTX) information, or discontinuous reception (DRX) information. Alternatively, it may be described as that the first indication information is configured to indicate at least one of the following information of a carrier: DTX information, or DRX information.

The second indication information is configured to indicate whether the first indication information indicates the DTX information or the DRX information.

In an example, in a case that the second indication information is configured to indicate that the first indication information indicates the DTX information, it means that the discontinuous transmission and reception information of each carrier is DTX information.

In an example, in a case that the second indication information is configured to indicate that the first indication information indicates the DRX information, it means that the discontinuous transmission and reception information of each carrier is DRX information.

The DCI includes the first indication information in the same way as described in S201, reference may be made to S201, which will not be elaborated here.

S402, the UE performs data transmission and reception based on the first indication information and the second indication information.

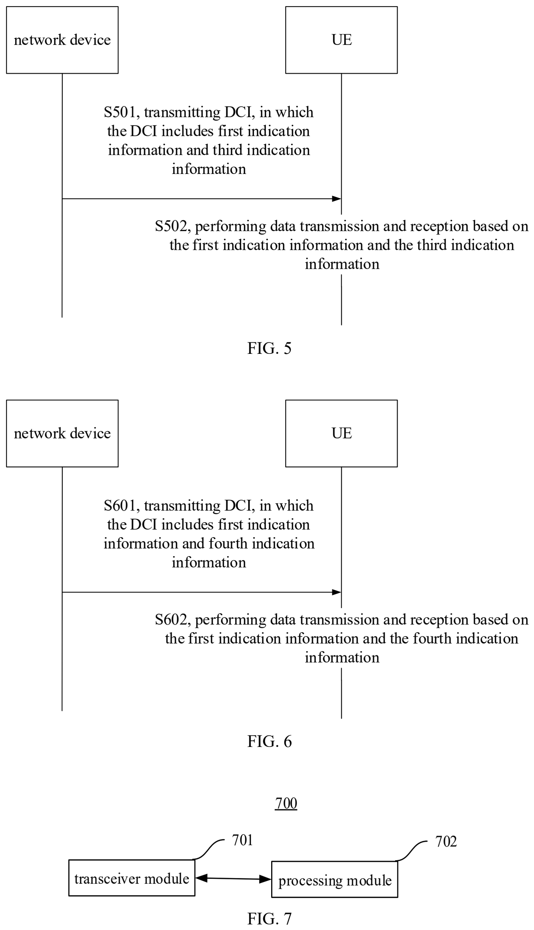

An embodiment of the present disclosure provides a method for transmitting indication information. FIG. 5 is a flowchart showing a method for transmitting indication information according to an embodiment. As shown in FIG. 5, the method includes S501 to S502.

S501, a network device transmits downlink control information (DCI), in which the DCI includes first indication information and third indication information.

The first indication information is configured to indicate discontinuous transmission and reception information of a carrier, in which the discontinuous transmission and reception information includes at least one of: discontinuous transmission (DTX) information, or discontinuous reception (DRX) information. Alternatively, it may be described as that the first indication information is configured to indicate at least one of the following information of a carrier: DTX information, or DRX information.

The third indication information is configured to indicate whether the first indication information indicates the DTX information or the DRX information of each carrier.

In an example, the first indication information indicates the discontinuous transmission and reception information of two carriers. The third indication information indicates that the discontinuous transmission and reception information of one carrier is the DTX information and the discontinuous transmission and reception information of the other carrier is the DRX information.

In another example, the first indication information indicates the discontinuous transmission and reception information of three carriers. The third indication information indicates that the discontinuous transmission and reception information of a first carrier is the DTX information, the discontinuous transmission and reception information of a second carrier is the DRX information, and the discontinuous transmission and reception information of a third carrier is the DTX information and the DRX information.

The DCI includes the third indication information in the same way as described in S201, reference may be made to S201, which will not be elaborated here.

S502, the UE performs data transmission and reception based on the first indication information and the third indication information.

An embodiment of the present disclosure provides a method for transmitting indication information. FIG. 6 is a flowchart showing a method for transmitting indication information according to an embodiment. As shown in FIG. 6, the method includes S601 to S602.

S601, a network device transmits downlink control information (DCI), in which the DCI includes first indication information and fourth indication information.

The first indication information is configured to indicate discontinuous transmission and reception information of a carrier, in which the discontinuous transmission and reception information includes at least one of: discontinuous transmission (DTX) information, or discontinuous reception (DRX) information. Alternatively, it may be described as that the first indication information is configured to indicate at least one of the following information of a carrier: DTX information, or DRX information.

The fourth indication information is configured to indicate whether the first indication information indicates the DTX information or the DRX information of each carrier in each UE group.

In an example, the first indication information indicates two UE groups. The first UE group includes one carrier, and the second UE group includes two carriers.

The fourth indication information indicates that the discontinuous transmission and reception information of the carrier in the first UE group is the DTX information, the discontinuous transmission and reception information of the first carrier in the second UE group is the DTX information, and the discontinuous transmission and reception information of the second carrier in the second UE group is the DRX information.

The DCI includes the fourth indication information in the same way as described in S201, reference may be made to S201, which will not be elaborated here.

S602, the UE performs data transmission and reception based on the first indication information and the fourth indication information.

Based on the same concept as the embodiments of the above methods, the embodiments of the present disclosure also provide a communication apparatus, which may have the functions of the UE in the embodiments of the above methods and is configured to perform the steps performed by the UE in the above embodiments. The functions may be implemented by hardware, by software, or by hardware executing the corresponding software. The hardware or software includes one or more modules corresponding to the above mentioned functions.

In some possible implementations, as shown in FIG. 7, the communication apparatus 700 may be regarded as the UE involved in the embodiments of the above methods and perform the steps performed by the UE in one of the embodiments of the above methods.

The communication apparatus 700 includes a transceiver module 701 and a processing module 702.

The transceiver module 701 is configured to receive first indication information transmitted by a network device, in which the first indication information is configured to indicate discontinuous transmission and reception information of a carrier, in which the discontinuous transmission and reception information includes at least one of: discontinuous transmission (DTX) information, or discontinuous reception (DRX) information.

In some possible implementations, the carrier is a primary carrier or a secondary carrier.

In some possible implementations, the transceiver module 701 is also configured to receive downlink control information (DCI) transmitted by the network device, in which the DCI includes the first indication information.

In some possible implementations, cyclic redundancy check (CRC) of the DCI is scrambled by a set radio network temporary identity (RNTI), in which the set RNTI is configured to identify that the DCI carries the discontinuous transmission and reception information.

In some possible implementations, the first indication information includes one or more first information blocks, in which each first information block indicates the discontinuous transmission and reception information of one carrier, and different first information blocks indicate the discontinuous transmission and reception information of different carriers.

In some possible implementations, the first indication information includes a plurality of second information blocks, in which each second information block indicates the discontinuous transmission and reception information of a UE group, and different second information blocks indicate the discontinuous transmission and reception information of different UE groups, in which the UE group includes at least one UE, and the second information block includes one or more first information blocks.

In some possible implementations, numbers of first information blocks included in different second information blocks are the same or different.

In some possible implementations, the transceiver module 701 is also configured to receive higher-layer signaling transmitted by the network device, in which the higher-layer signaling is configured to indicate a position of the discontinuous transmission and reception information corresponding to the UE in the first indication information.

In some possible implementations, the DCI includes second indication information, in which the second indication information is configured to indicate whether the first indication information indicates the DTX information or the DRX information.

In some possible implementations, the DCI includes third indication information, in which the third indication information is configured to indicate whether the first indication information indicates the DTX information or the DRX information of each carrier.

In some possible implementations, the DCI includes fourth indication information, in which the fourth indication information is configured to indicate whether the first indication information indicates the DTX information or the DRX information of each carrier in each UE group.

In some possible implementations, the first indication information included in the DCI takes effect at a set time-domain position.

In some possible implementations, the DTX information includes a DTX effective duration, and the DRX information includes a DRX effective duration.

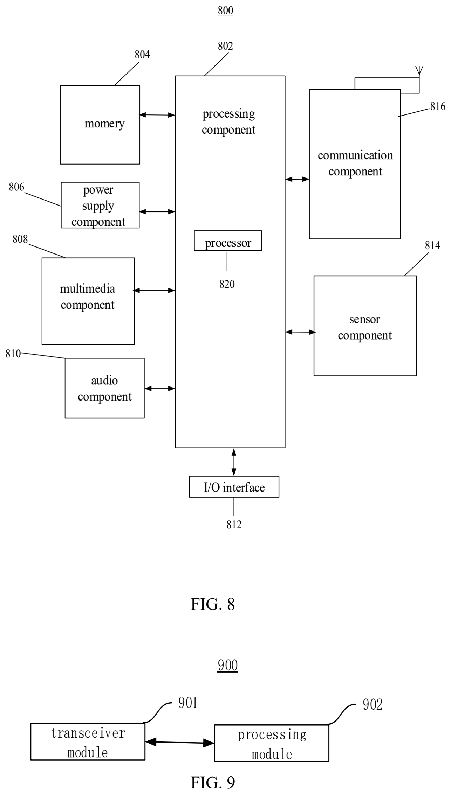

In a case that the communication apparatus is a user equipment (UE) 101, its structure may also be as shown in FIG. 8. FIG. 8 is a block diagram of an apparatus 800 for receiving indication information according to an embodiment. For example, the apparatus 800 may be a mobile phone, a computer, a digital broadcast terminal, a messaging device, a game console, a tablet device, a medical device, a fitness device, a personal digital assistant, etc.

Referring to FIG. 8, the apparatus 800 may include one or more of: a processing component 802, a memory 804, a power supply component 806, a multimedia component 808, an audio component 810, an input/output (I/O) interface 812, and a sensor component 814, and a communication component 816.

The processing component 802 generally controls the overall operations of the apparatus 800, such as operations associated with display, phone calls, data communications, camera operations, and recording operations. The processing component 802 may include one or more processors 820 to execute instructions to complete all or part of the steps of the above method. Additionally, the processing component 802 may include one or more modules that facilitate interaction between processing component 802 and other components. For example, the processing component 802 may include a multimedia module to facilitate interaction between the multimedia component 408 and the processing component 802.

The memory 804 is configured to store various types of data to support operations at the apparatus 800. Examples of such data include instructions for any application or method operating on the apparatus 800, contact data, phonebook data, messages, pictures, videos, etc. The memory 804 may be implemented by any type of volatile or non-volatile storage device, or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 806 provides power to various components of the apparatus 800. The power supply component 806 may include a power management system, one or more power supplies, and other components associated with generating, managing, and distributing power to the apparatus 800.

The multimedia component 808 includes a screen that provides an output interface between the apparatus 800 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundary of a touch or slide action, but also detect the duration and pressure associated with the touch or slide action. In some embodiments, the multimedia component 808 includes a front-facing camera and/or a rear-facing camera. When the apparatus 800 is in an operating mode, such as a shooting mode or a video mode, the front camera and/or the rear camera may receive external multimedia data. Each front-facing camera and rear-facing camera may be a fixed optical lens system or have a focal length and optical zoom capabilities.

The audio component 810 is configured to output and/or input an audio signal. For example, the audio component 810 includes a microphone (MIC) configured to receive the external audio signal when the apparatus 800 is in an operating mode, such as a call mode, a recording mode, and a speech recognition mode. The received audio signal may be further stored in the memory 804 or sent via the communication component 816. In some embodiments, the audio component 810 also includes a speaker for outputting audio signals.

The I/O interface 812 provides an interface between the processing component 802 and a peripheral interface module. The peripheral interface module may be a keyboard, a click wheel, a button, etc. These button may include, but is not limited to: a home button, a volume button, a start button, and a lock button.

The sensor component 814 includes one or more sensors that provide various aspects of status assessment for the apparatus 800. For example, the sensor component 814 may detect the open/closed state of the apparatus 800, the relative positioning of components, such as a display and a keypad of the apparatus 800, the sensor component 814 may also detect a position change of the apparatus 800 or a component of the apparatus 800, presence or absence of user contact with the apparatus 800, an orientation or an acceleration/deceleration of the apparatus 800, and a temperature change of the apparatus 800. The sensor component 814 may include a proximity sensor configured to detect presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the apparatus 800 and other devices. The apparatus 800 may access a wireless network based on a communication standard, such as WiFi, 4G, or 5G, or their combination. In an exemplary embodiment, the communication component 816 receives a broadcast signal or broadcast related information from an external broadcast management system via a broadcast channel. In an exemplary embodiment, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an exemplary embodiment, the apparatus 800 may be configured by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components used to perform the above methods.

In an exemplary embodiment, a non-temporary computer-readable storage medium including instructions is also provided, such as the memory 804 including instructions that may be executed by a processor 820 of the apparatus 800 to accomplish the method described above. For example, the non-temporary computer readable storage media may be ROM, random access memory (RAM), CD-ROM, magnetic tape, floppy disk, and optical data storage device.

Based on the same concept as the embodiments of the above methods, the embodiments of the present disclosure also provides a communication apparatus, which may have the functions of the network device in the embodiments of the above methods and is configured to perform the steps performed by the network device in the above embodiments. The functions may be implemented through hardware, by software, or by hardware executing the corresponding software. The hardware or software includes one or more modules corresponding to the above mentioned functions.

In some possible implementations, as shown in FIG. 9, the communication apparatus 900 may be regarded as the network device involved in the embodiments of the above methods and perform the steps performed by the network device in one of the embodiments of the above methods.

The communication apparatus 900 includes a transceiver module 901 and a processing module 902.

The transceiver module 901 is configured to transmit first indication information, in which the first indication information is configured to indicate discontinuous transmission and reception information of a carrier, in which the discontinuous transmission and reception information includes at least one of: discontinuous transmission (DTX) information, or discontinuous reception (DRX) information.

In some possible implementations, the carrier is a primary carrier or a secondary carrier.

In some possible implementations, the transceiver module 901 is also configured to transmit downlink control information (DCI), in which the DCI includes the first indication information.

In some possible implementations, cyclic redundancy check (CRC) of the DCI is scrambled by a set radio network temporary identity (RNTI), in which the set RNTI is configured to identify that the DCI carries the discontinuous transmission and reception information.

In some possible implementations, the first indication information includes one or more first information blocks, in which each first information block indicates the discontinuous transmission and reception information of one carrier, and different first information blocks indicate the discontinuous transmission and reception information of different carriers.

In some possible implementations, the first indication information includes a plurality of second information blocks, in which each second information block indicates the discontinuous transmission and reception information of a UE group, and different second information blocks indicate the discontinuous transmission and reception information of different UE groups, in which the UE group includes at least one UE, and the second information block includes a plurality of first information blocks.

In some possible implementations, numbers of first information blocks included in different second information blocks are the same or different.

In some possible implementations, the transceiver module 901 is also configured to receive higher-layer signaling transmitted by the network device, in which the higher-layer signaling is configured to indicate a position of the discontinuous transmission and reception information corresponding to the UE in the first indication information.

In some possible implementations, the DCI includes second indication information, in which the second indication information is configured to indicate whether the first indication information indicates the DTX information or the DRX information.

In some possible implementations, the DCI includes third indication information, in which the third indication information is configured to indicate whether the first indication information indicates the DTX information or the DRX information of each carrier.

In some possible implementations, the DCI includes fourth indication information, in which the fourth indication information is configured to indicate whether the first indication information indicates the DTX information or the DRX information of each carrier in each UE group.

In some possible implementations, the first indication information included in the DCI takes effect at a set time-domain position.

In some possible implementations, the DTX information includes a DTX effective duration, and the DRX information includes a DRX effective duration.

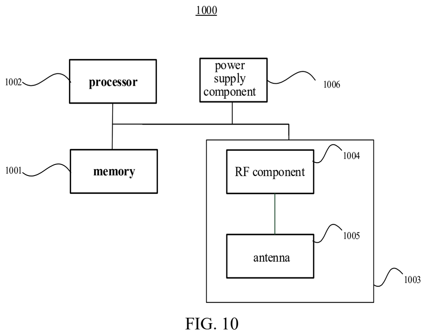

In a case that the communication apparatus is network device 102, its structure may also be as shown in FIG. 10. As shown in FIG. 10, the apparatus 1000 includes a memory 1001, a processor 1002, a transceiver component 1003, and a power supply component 1006. The memory 1001 is coupled with the processor 1002 and may be configured to store the programs and data necessary for the communication apparatus 1000 to implement various functions. The processor 1002 is configured to support the communication apparatus 1000 to perform the corresponding functions in the above method, and the functions may be achieved by calling the program stored in the memory 1001. The transceiver component 1003 may be a wireless transceiver, which may be configured to support the communication apparatus 1000 to receive signaling and/or data and to send signaling and/or data through the wireless air interface. The transceiver component 1003 may also be called the transceiver unit or communication unit. The transceiver component 1003 may include a radio frequency component 1004 and one or more antennas 1005. The radio frequency component 1004 may be a remote radio unit (RRU). Specifically, it may be used for transmission of radio frequency signals and conversion between radio frequency signals and baseband signals. The one or more antennas 1005 may specifically be used for radiation and reception of radio frequency signals.

In a case that the communication apparatus 1000 needs to send data, the processor 1002 may perform baseband processing on the data to be sent and then output the baseband signal to the radio frequency unit. The radio frequency unit may perform radio frequency (RF) processing on the baseband signal and then transmits the RF signal in the form of electromagnetic waves through the antenna. In a case that data is sent to the communication apparatus 1000, the RF unit receives the RF signal through the antenna, converts the RF signal into the baseband signal, and outputs the baseband signal to the processor 1002. The processor 1002 converts the baseband signal into data and processes the data.

### INDUSTRIAL PRACTICALITY

A network device transmits indication information, in which the indication information is configured to indicate DTX information and/or DRX information in a serving cell, so that a UE may accurately know a state of the network device performing the DTX and/or DRX, and perform data transmission and reception based on the state correspondingly, thereby ensuring the normal data transmission on the UE in a case that the network device performs the DTX and/or DRX.

## Claims

1. A method for receiving indication information, performed by a user equipment (UE) comprising:
receiving first indication information transmitted by a network device, wherein the first indication information is configured to indicate discontinuous transmission and reception information of a carrier, wherein the discontinuous transmission and reception information comprises at least one of: discontinuous transmission (DTX) information, or discontinuous reception (DRX) information.

2. The method according to claim 1, wherein the carrier is a primary carrier or a secondary carrier.

3. The method according to claim 1, wherein receiving the first indication information transmitted by the network device comprises:
receiving downlink control information (DCI) transmitted by the network device, wherein the DCI comprises the first indication information.

4. The method according to claim 3, wherein cyclic redundancy check (CRC) of the DCI is scrambled by a set radio network temporary identity (RNTI), wherein the set RNTI is configured to identify that the DCI carries the discontinuous transmission and reception information.

5. The method according to any one of claims 1-4, wherein the first indication information comprises one or more first information blocks, wherein each first information block indicates the discontinuous transmission and reception information of one carrier, and different first information blocks indicate the discontinuous transmission and reception information of different carriers.

6. The method according to claim 5, wherein the first indication information comprises a plurality of second information blocks, wherein each second information block indicates the discontinuous transmission and reception information of a UE group, and different second information blocks indicate the discontinuous transmission and reception information of different UE groups, wherein the UE group comprises at least one UE, and the second information block comprises one or more first information blocks.

7. The method according to claim 6, wherein numbers of first information blocks comprised in different second information blocks are the same or different.

8. The method according to claim 6, further comprising:
receiving higher-layer signaling transmitted by the network device, wherein the higher-layer signaling is configured to indicate a position of the discontinuous transmission and reception information corresponding to the UE in the first indication information.

9. The method according to claims 3 or 4, wherein the DCI comprises second indication information, wherein the second indication information is configured to indicate whether the first indication information indicates the DTX information or the DRX information.

10. The method according to claim 5, wherein the DCI comprises third indication information, wherein the third indication information is configured to indicate whether the first indication information indicates the DTX information or the DRX information of each carrier.

11. The method according to claim 6, wherein the DCI comprises fourth indication information, wherein the fourth indication information is configured to indicate whether the first indication information indicates the DTX information or the DRX information of each carrier in each UE group.

12. The method according to any one of claims 3, 4, 9, 10 or 11, wherein the first indication information comprised in the DCI takes effect at a set time-domain position.

13. The method according to any one of claims 1-11, wherein the DTX information comprises a DTX effective duration, and the DRX information comprises a DRX effective duration.

14. A method for transmitting indication information, performed by a network device, comprising:
transmitting first indication information, wherein the first indication information is configured to indicate discontinuous transmission and reception information of a carrier, wherein the discontinuous transmission and reception information comprises at least one of: discontinuous transmission (DTX) information, or discontinuous reception (DRX) information.

15. The method according to claim 14, wherein the carrier is a primary carrier or a secondary carrier.

16. The method according to claim 14, wherein transmitting the first indication information comprises:
transmitting downlink control information (DCI), wherein the DCI comprises the first indication information.

17. The method according to claim 16, wherein cyclic redundancy check (CRC) of the DCI is scrambled by a set radio network temporary identity (RNTI), wherein the set RNTI is configured to identify that the DCI carries the discontinuous transmission and reception information.

18. The method according to any one of claims 14-17, wherein the first indication information comprises one or more first information blocks, wherein each first information block indicates the discontinuous transmission and reception information of one carrier, and different first information blocks indicate the discontinuous transmission and reception information of different carriers.

19. The method according to claim 18, wherein the first indication information comprises a plurality of second information blocks, wherein each second information block indicates the discontinuous transmission and reception information of a user equipment (UE) group, and different second information blocks indicate the discontinuous transmission and reception information of different UE groups, wherein the UE group comprises at least one UE, and the second information block comprises one or more first information blocks.

20. The method according to claim 19, wherein numbers of first information blocks comprised in different second information blocks are the same or different.

21. The method according to claim 19, further comprising:
receiving higher-layer signaling transmitted by the network device, wherein the higher-layer signaling is configured to indicate a position of the discontinuous transmission and reception information corresponding to the UE in the first indication information.

22. The method according to claims 16 or 17, wherein the DCI comprises second indication information, wherein the second indication information is configured to indicate whether the first indication information indicates the DTX information or the DRX information.

23. The method according to claim 18, wherein the DCI comprises third indication information, wherein the third indication information is configured to indicate whether the first indication information indicates the DTX information or the DRX information of each carrier.

24. The method according to claim 19, wherein the DCI comprises fourth indication information, wherein the fourth indication information is configured to indicate whether the first indication information indicates the DTX information or the DRX information of each carrier in each UE group.

25. The method according to any one of claims 16, 17, 22, 23 or 24, wherein the first indication information comprised in the DCI takes effect at a set time-domain position.

26. The method according to any one of claims 14-25, wherein the DTX information comprises a DTX effective duration, and the DRX information comprises a DRX effective duration.

27. A user equipment (UE), comprising:
a transceiver module, configured to receive first indication information transmitted by a network device, wherein the first indication information is configured to indicate discontinuous transmission and reception information of a carrier, wherein the discontinuous transmission and reception information comprises at least one of: discontinuous transmission (DTX) information, or discontinuous reception (DRX) information.

28. A network device, comprising:
a transceiver module, configured to transmit first indication information, wherein the first indication information is configured to indicate discontinuous transmission and reception information of a carrier, wherein the discontinuous transmission and reception information comprises at least one of: discontinuous transmission (DTX) information, or discontinuous reception (DRX) information.

29. A communication apparatus, comprising a processor and a memory, wherein the memory is configured to store a computer program; and the processor is configured to execute the computer program to perform a method according to any one of claims 1-13 or 14-26.

30. A computer-readable storage medium, wherein an instruction is stored on the computer-readable storage medium, and when the instruction is executed, a method according to any one of claims 1-13 or 14-26 is implemented.

31. A communication system, comprising:
a user equipment (UE), configured to implement a method according to any one of claims 1 - 13; and
a network device, configured to implement a method according to any one of claims 14-26.
